# EUROPÄISCHE PATENTANMELDUNG

(11) **EP 1 234 844 A1**
(43) Veröffentlichungstag der Anmeldung: **28.08.2002**
(21) Anmeldenummer: 02001392.6
(22) Anmeldetag: 19.01.2002
(51) Int. Cl.: C08G 18/48, C08G 18/66

(54) **Thermoplastische Polyurethane auf der Basis aliphatischer Isocyanate**

(30) Priorität: 26.02.2001 DE 10109301
(71) Anmelder: BASF AKTIENGESELLSCHAFT, 67056 Ludwigshafen (DE)
(72) Erfinder: Leberfinger, Marcus, 49124 Georgsmarienhütte (DE); Scholz, Günter, Dr., 49448 Lemförde (DE); Arenz, Stefan, Dr., 49090 Osnabrück (DE); Brand, Johann Diedrich, Dr., 49448 Lemförde (DE)

(57) **Zusammenfassung**

Thermoplastische Polyurethane erhältlich durch Umsetzung von (a) aliphatischen Diisocyanaten mit Polytetrahydrofuran mit einem Molekulargewicht von 750 bis 2500 als (b) gegenüber Isocyanaten reaktive Verbindung.

## Beschreibung

Die Erfindung bezieht sich auf thermoplastische Polyurethane erhältlich durch Umsetzung von (a) aliphatischen Diisocyanaten mit Polytetrahydrofuran mit einem Molekulargewicht von 750 bis 2500 als (b) gegenüber Isocyanaten reaktive Verbindung. Des weiteren betrifft die Erfindung Verfahren zur Herstellung dieser thermoplastischen Polyurethane und deren Verwendung.

Thermoplastische Polyurethane, im Folgenden auch als TPU bezeichnet, und Verfahren zu deren Herstellung sind allgemein bekannt und vielfältig beschrieben. Diese TPU sind teilkristalline Werkstoffe und gehören zu der Klasse der thermoplastischen Elastomere. Sie zeichnen sich unter anderem durch gute Festigkeiten, Abriebe, Weiterreißfestigkeiten und Chemikalienbeständigkeit aus, und können in nahezu beliebiger Härte durch geeignete Rohstoffzusammensetzung hergestellt werden. Zusätzlich bieten TPU den Vorteil einer kostengünstigen Herstellung, beispielsweise mit dem Band- oder dem Reaktionsextruderverfahren, die kontinuierlich oder diskontinuierlich durchgeführt werden können, und die einfache Thermoplastverarbeitung.

DE-A 197 57 569 offenbart aliphatische, emissionsfreie, sinterfähige thermoplastische Polyurethanformmassen die ausschließlich aus linearen, aliphatischen Komponenten hergestellt werden.
TPU auf Basis insbesondere aliphatischer Isocyanate haben außerdem den Vorteil einer besonders guten Lichtechtheit. Diese aliphatischen TPU finden zunehmend Anwendung bei der Herstellung von lichtstabilen und farbechten Formteilen wie z.B. Spritzgußteilen jeglicher Form, Folien, Schläuche, Kabel oder Sinterfolien wie etwa Oberflächen von Instrumententafeln. Gerade für den Einsatz als durchgängige Folie auf Armaturenbrettern, hinter denen sich Airbags befinden, werden hohe Ansprüche an die Materialeigenschaften gestellt. Bei der Auslösung des Airbags wird an dieser Stelle die Instrumententafel aufgerissen. Ein wichtiges Kriterium beim Auslösen dieser hinter der Oberflächenfolie der Instrumententafel befindlichen Airbags ist es, daß sich sowohl bei hohen als auch insbesondere bei tiefen Temperaturen keine Partikel aus der Oberflächenfolie des Armaturenbretts lösen, die zu Verletzungen der Insassen führen könnten.

Ziel der vorliegenden Erfindung war es somit, die Materialeigenschaften von aliphatischem TPU bei tiefen Temperaturen, d.h. bei Temperaturen zwischen -50 und 0 °C, zu verbessern, wobei das TPU insbesondere elastisch, d.h. weniger spröde als bekannte aliphatische TPU sein sollte. Des weiteren sollten die TPU aber auch bei den im Automobilinnenraum üblichen hohen Temperaturen über eine sehr gute Stabilität verfügen.

Diese Aufgabe konnte durch die eingangs dargestellten thermoplastischen Polyurethane gelöst werden.

Erfindungsgemäß wird somit als gegenüber Isocyanaten reaktive Verbindung (b) Polytetrahydrofuran mit einem Molekulargewicht von 750 bis 2500 g/mol, bevorzugt 800 bis 1200 g/mol, insbesondere 1000 g/mol eingesetzt. Der Gewichtsanteil des Polytetrahydrofurans mit einem Molekulargewicht von 750 bis 2500 an dem Gesamtgewicht der gegenüber Isocyanaten reaktiven Verbindungen (b), also der Polyole, beträgt bevorzugt 5 bis 100 Gew.-%, besonders bevorzugt 30 bis 70 Gew.-%. Bevorzugt werden als (a), (b) und gegebenenfalls (c) ausschließlich aliphatische und/oder cycloaliphatische Verbindungen eingesetzt.

Wie in den Beispielen anschaulich nachgewiesen wird, kann gerade durch diesen erfindungsgemäßen Einsatz des Polytetrahydrofurans mit dem erfindungsgemäßen Molekulargewicht ein TPU erhalten werden, das bei tiefen Temperaturen deutlich weniger spröde ist. Die besonderen Anforderungen, die gerade im Falle von Oberflächenfolien für Instrumententafeln an die TPU gestellt werden, können somit durch die erfindungsgemäßen, besonders elastischen TPU erfüllt werden. Erfindungsgemäß konnte somit durch die Verwendung von Polytetrahydrofuran mit einem Molekulargewicht von 750 bis 2500 bei der Herstellung von thermoplastischen Polyurethanen die elastischen Eigenschaften des thermoplastischen Polyurethans bei Temperaturen von -60 bis 0°C deutlich erhöht werden.

Verfahren zur Herstellung von thermoplastischen Polyurethanen sind dem Fachmann allgemein bekannt. Üblicherweise erfolgt die Herstellung durch die Umsetzung von (a) Diisocyanaten, im vorliegenden Fall aliphatischen Diisocyanaten, mit (b) gegenüber Isocyanaten reaktiven Verbindungen mit einem Molekulargewicht von 500 bis 8000 gegebenenfalls in Gegenwart von (c) Kettenverlängerungsmitteln mit einem Molekulargewicht von 60 bis 499, (d) Katalysatoren und/oder (e) üblichen Hilfsstoffen, wobei erfindungsgemäß als gegenüber Isocyanaten reaktive Verbindung (b) Polytetrahydrofuran mit einem Molekulargewicht von 750 bis 2500 eingesetzt wird.

Zur Einstellung von Härte der TPUs können die Aufbaukomponenten (b) und (c) in relativ breiten molaren Verhältnissen variiert werden. Bewährt haben sich molare Verhältnisse von Komponente (b) zu insgesamt einzusetzenden Kettenverlängerungsmitteln (c) von 1 : 0,5 bis 1 : 8, insbesondere von 1 : 1 bis 1 : 4, wobei die Härte der TPUs mit zunehmendem Gehalt an (c) ansteigt.

Die Umsetzung kann erfindungsgemäß bei einer Kennzahl von 0,8 bis 1,2 : 1, bevorzugt bei einer Kennzahl von 0,9 bis 1 : 1 erfolgen. Die Kennzahl ist definiert durch das Verhältnis der insgesamt bei der Umsetzung eingesetzten Isocyanatgruppen der Komponente (a) zu den gegenüber Isocyanaten Gruppen, d.h. den aktiven Wasserstoffen, der Komponenten (b) und gegebenenfalls (c).

Die Herstellung der thermoplastischen Polyurethane erfolgt nach den bekannten Verfahren üblicherweise im One-shot- oder Prepolymerverfahren auf der Bandanlage oder auf dem Reaktionsextruder. Hierbei werden die zur Reaktion kommenden Komponenten (a), (b) und gegebenenfalls (c) gemeinsam oder in bestimmter Reihenfolge vereinigt und zur Reaktion gebracht.

Beim Reaktionsextruderverfahren werden die Aufbaukomponenten (a) bis (c) sowie gegebenenfalls (d) und/oder (e) einzeln oder als Gemisch in den Extruder eingeführt, z.B. bei Temperaturen von 100 bis 250°C, vorzugsweise 140 bis 220°C zur Reaktion gebracht, das erhaltene TPU wird extrudiert, abgekühlt und granuliert.

Die Verarbeitung der erfindungsgemäß hergestellten TPU, die üblicherweise als Granulat oder in Pulverform vorliegen, zu den gewünschten Kunststoffteilen oder Folien kann beispielsweise durch allgemein bekannte Extrusion, durch üblichen Spritzguß oder auch, insbesondere im Falle der Folien, durch das Sinterverfahren erfolgen.

Dieses bevorzugte Sinterverfahren zur Herstellung von TPU-Folien erfolgt üblicherweise derart, indem man nach der Umsetzung der Komponenten (a), (b) und gegebenenfalls (c) in Gegenwart von gegebenenfalls (d) und/oder (e) die thermoplastischen Polyurethane auf eine Korngröße von 50 bis 1000, bevorzugt 50 bis 800, besonders bevorzugt 100 bis 500 µm zerkleinert und die zerkleinerten thermoplastischen Polyurethane bei einer Temperatur von 180 bis 280°C zu den gewünschten Produkten verarbeitet. Das TPU kann vor der Vermahlung vorzugsweise durch Compoundierung über ein Farbmasterbatch eingefärbt werden. Die Zerkleinerung kann hierbei bevorzugt etwa durch Kaltmahlung erfolgen. Während oder nach der Mahlung können dem TPU-Pulver Additive wie z. B. Rieselhilfsmittel zugegeben werden. Nach diesem bevorzugten Sinterverfahren, daß auch als Powder-Slush-Verfahren bekannt ist, kann das TPU auf die auf eine Temperatur von 160 bis 280°C, bevorzugt 190 bis 250°C, erhitzte Oberfläche eines Formwerkzeuges in einer für die gewünschte Foliendicke ausreichenden Menge aufgetragen und geschmolzen werden, wobei überschüssiges TPU-Pulver wieder entfernt werden kann. Die TPU-Pulver schmelzen auf der erwärmten und bevorzugt beheizbaren Oberfläche zu den gewünschten Folien, und können beispielsweise nach dem Abkühlen des Formwerkzeuges entnommen werden. Die erfindungsgemäßen TPU-Folien weisen bevorzugt eine Dicke von 0,3 bis 3 mm auf. Derartige Folien sind insbesondere zur Hinterschäumung mit Polyurethanschaumstoffen geeignet und finden wie bereits dargestellt somit insbesondere Verwendung im Automobilbau, beispielsweise als Oberflächen von Instrumententafeln oder Türseitenteilen. Die Oberflächen sind hierbei oft genarbt und weisen bzgl. Haptik und Optik eine lederähnliche Struktur auf. Die Rieselhilfsmittel sind als Hilfsmittel, die dem TPU zugegeben werden, nicht mit den Hilfs- und Zusatzstoffen (e) zu verwechseln, die bei der Produktion der TPU eingesetzt werden können.

Bevorzugt können die TPU vor der Zerkleinerung oder nach der Zerkleinerung bzw. Mahlung und somit vor der Verarbeitung zu den Folien mit einem Strom aus bevorzugt inertem Gas, bevorzugt heißem Gas, behandelt werden. Durch dieses Durchströmen des TPU mit einem Gas, beispielsweise Luft oder Stickstoff, beispielsweise für 1 bis 20 Stunden bei bevorzugt 70 bis 160°C, werden aus dem thermoplastischen Polyurethan flüchtige Substanzen, beispielsweise cyclische Produkte mit einem Molekulargewicht von 200 bis 2000 der Reaktion der Komponenten (a), (b) und (c), insbesondere (a) und (c), mit einem Gas ausgeblasen. Durch diese Behandlung wird der Gehalt an flüchtigen Verbindungen in den TPU zusätzlich erniedrigt, was sich nicht nur positiv auf die Oberflächenoptik, sondern auch positiv bei den Foggingwerten bemerkbar macht. Gleichzeitig können durch diesen Schritt aber auch niedermolekulare Anteile ausgeblasen werden, die nicht als Nebenreaktionsbestandteile der Polyaddition entstanden sind, sondern Bestandteile der Ausgangsrohstoffe sind. Dies können z.B. lineare und cyclische Oligomere des eingesetzten Polyols, z.B. des PolyesterPolyols sein. Bevorzugt bläst man somit vor der Verarbeitung zu Folien flüchtige Substanzen aus dem thermoplastischen Polyurethan mit einem Gas aus.

Das Verhältnis (Kennzahl) der Isocyanatgruppen der Komponente (a) zu der Summe der gegenüber Isocyanaten reaktiven Gruppen der Komponenten (b) und (c), wobei gegenüber Isocyanaten reaktive Gruppen entsprechend ihrer Funktionalität gegenüber Isocyanaten gezählt werden, beträgt bevorzugt 0,8 bis 1,2 : 1, besonders bevorzugt 0,9 bis 1,1 : 1. Über diese Kennzahl kann das Fließverhalten des TPU gezielt eingestellt werden. Die Einstellung eines sehr guten und optimalen Fließverhaltens für die thermoplastische Verarbeitung im Powder-Slush- oder Sinter-Verfahren kann vorteilhaft sein, da bei diesem Verfahren im Gegensatz zur Extrusion oder Spritzguß das Material ohne Friktions- oder Schereintrag verarbeitet wird. Aus diesem Grund wird besonders bevorzugt ein Isocyanatunterschuß eingestellt, daß heißt insbesondere wird ein Verhältnis (Kennzahl) der Isocyanatgruppen der Komponente (a) zu der Summe der gegenüber Isocyanaten reaktiven Gruppen der Komponenten (b) und (c) von 0,95 bis 0,99 : 1 verwendet. Auf diese Weise läßt sich den Schmelzindex bestimmt nach DIN ISO 1133 gezielt einstellen. Ein derartiges Powder-Slush-Verfahren ist beispielhaft in der EP-B 399 272, Spalte 12, Zeile 22 bis 47, sowie der DE-A 197 57 569, Seite 3, Zeile 51 bis 63 beschrieben, wobei diese Beschreibungen Inhalt der vorliegenden Erfindung ist.

Die Extrusion und der Spritzguß von TPU sind allgemein bekannt und vielfältig beschrieben. Als spritzgegossene Kunststoffteile sind in dieser Schrift alle Formen von Bauteilen, Gegenständen und Formen zu verstehen, die erfindungsgemäß mittels Spritzguß hergestellt werden können. Die Spritzgußverarbeitung kann auf üblichen, dem Fachmann bekannten Anlagen erfolgen. Die Verarbeitungstemperaturen liegen üblicherweise bei 150°C bis 230°C. Durch die gezielte Einstellung eines niedrigen Molekulargewichtes, einerseits über die Kennzahl oder/und über den Einsatz von Kettenabbruchsmitteln, können Spritzgußtemperaturen von 150°C bis 200°C vorzugsweise von 150°C bis 180°C realisiert werden.

Unter dem Begriff Kunststoffteile sind beispielsweise Schläuche, Kabelummantellungen, Stoßfängerleisten, Automobilantennen und - halterungen, Außenspiegelfußdichtungen, Türgriffe und -dichtungen, Lampendichtungen, Scheibenumspritzungen, Lautsprecherabdeckungen, Lüftungsteile, Dreh- und Schaltknöpfe, Türablagen, Armlehnen, Airbagabdeckungen, Pralltöpfe, Getränkehalter und Instrumententafeln zu verstehen. Als Kunststoffteile sind Karosserieaußenteile und Automobilinterieurteile besonders bevorzugt.

Insbesondere betrifft die vorliegende Erfindung Oberflächenfolien auf Armaturenbrettern von Automobilen.

Die bei der Herstellung der TPUs üblicherweise verwendeten Komponenten (a), (b), (c) sowie gegebenenfalls (e) und/oder (f) sollen im Folgenden beispielhaft beschrieben werden:
a) Als aliphatische Diisocyanate (a) werden übliche aliphatische und/oder cycloaliphatische Diisocyanate eingesetzt, beispielsweise Tri-, Tetra-, Penta-, Hexa-, Hepta- und/oder Oktamethylendiisocyanat, 2-Methyl-pentamethylen-diisocyanat-1,5, 2-Ethyl-butylen-diisocyanat-1,4, 1-Isocyanato-3,3,5-trimethyl-5-isocyanatomethyl-cyclohexan (Isophoron-diisocyanat, IPDI), 1,4- und/oder 1,3-Bis(isocyanatomethyl)cyclohexan (HXDI), 1,4-Cyclohexan-diisocyanat, 1-Methyl-2,4- und/oder -2,6-cyclohexan-diisocyanat, 4,4'-, 2,4'- und/oder 2,2'-Dicyclohexylmethan-diisocyanat. Bevorzugt wird Hexamethylen-1,6-diisocyanat (Hexamethylendiisocyanat, HDI) als aliphatisches Diisocyanat (a) eingesetzt.
b) Als gegenüber Isocyanaten reaktive Verbindungen (b) wird das eingangs dargestellte Polytetrahydrofuran eingesetzt. Gegebenenfalls können zusätzlich zu diesem Polytetrahydrofuran weitere, allgemein bekannte Polyhydroxylverbindungen mit Molekulargewichten von 500 bis 8000, bevorzugt 600 bis 6000, insbesondere 800 bis 4000, und bevorzugt einer mittleren Funktionalität von 1,8 bis 2,6, bevorzugt 1,9 bis 2,2, insbesondere 2 eingesetzt werden, beispielsweise Polyesterole, Polyetherole und/oder Polycarbonatdiole.
c) Als Kettenverlängerungsmittel (c) können allgemein bekannte Verbindungen eingesetzt werden, beispielsweise Diamine und/oder Alkandiole mit 2 bis 10 C-Atomen im Alkylenrest, insbesondere Ethylenglykol und/oder Butandiol-1,4, und/oder Hexandiol und/oder Di- und/oder Tri-oxyalkylenglykole mit 3 bis 8 Kohlenstoffatomen im Oxyalkylenrest, bevorzugt entsprechende Oligo-Polyoxypropylenglykole, wobei auch Mischungen der Kettenverlängerer eingesetzt werden können. Als Kettenverlängerer können auch 1,4-Bis-(hydroxymethyl)-benzol (1,4-BHMB), 1,4-Bis-(hydroxyethyl)-benzol (1,4-BHEB) oder 1,4-Bis-(2-hydroxyethoxy)-benzol (1,4-HQEE) zum Einsatz kommen. Bevorzugt werden als Kettenverlängerungsmittel Ethylenglykol und Hexandiol, besonders bevorzugt Ethylenglykol eingesetzt.
d) Geeignete Katalysatoren, welche insbesondere die Reaktion zwischen den NCO-Gruppen der Diisocyanate (a) und den Hydroxylgruppen der Aufbaukomponenten (b) und (c) beschleunigen, sind die nach dem Stand der Technik bekannten und üblichen tertiären Amine, wie z.B. Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan und ähnliche sowie insbesondere organische Metallverbindungen wie Titansäureester, Eisenverbindungen wie z.B. Eisen-(III)-acetylacetonat, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,0001 bis 0,1 Gew.-Teilen pro 100 Gew.-Teile Polyhydroxylverbindung (b) eingesetzt.
e) Neben Katalysatoren können den Aufbaukomponenten (a) bis (d) auch übliche Hilfsstoffe (e) hinzugefügt werden. Genannt seien beispielsweise oberflächenaktive Substanzen, Flammschutzmittel, Keimbildungsmittel, Gleit- und Entformungshilfen, Farbstoffe und Pigmente, Inhibitoren, Stabilisatoren gegen Hydrolyse, Licht, Hitze, Oxidation oder Verfärbung, Schutzmittel gegen mikrobiellen Abbau, anorganische und/oder organische Füllstoffe, Verstärkungsmittel und Weichmacher.

Neben den genannten Rohstoffen (a)-(e) können auch Kettenabbruchsmittel eingesetzt werden mit einem Molekulargewicht von 46 bis 499. Solche Kettenabbruchsmittel sind Verbindungen, die lediglich eine gegenüber Isocyanaten reaktive funktionelle Gruppe aufweisen, wie z.B. Monoalkohole. Durch solche Kettenabbruchsmittel kann das Fließverhalten gezielt eingestellt werden.

Nähere Angaben über die oben genannten Hilfsmittel- und Zusatzstoffe sind der Fachliteratur zu entnehmen. Alle in dieser Schrift genannten Molekulargewichte weisen die Einheit [g/mol] auf und stellen das Zahlenmittel des Molekulargewichtes dar.

Die erfindungsgemäßen Vorteile sollen anhand der folgenden Beispiele dargestellt werden.

### Beispiele:

### TPU-Herstellung

Die Mischung aus einem Polyester (Butandiol/Hexandiol-Adipat; Molekulargewicht 2000; OH-Zahl = 56,1), Polytetrahyrofuran (PTHF) mit einem Molekulargewicht 1000 und einer OH-Zahl 112,1, je 0,5 Gew.-% (bezogen auf Gesamtansatz) Tinuvin® 328, Tinuvin® 622LD, Irganox® 245 und die entsprechende Menge an Ethylenglykol wurde bei 80°C mit der aus der Tabelle zu entnehmenden Menge an Hexamethylendiisocyanat (HDI) Rühren vereinigt. Erreicht das Reaktionsgemisch eine Temperatur von 110°C, so wurde die Masse in eine Schale ausgegossen und die Reaktion bei 80 °C für 15 h im Temperofen vervollständigt.

Die Reaktion kann gegebenenfalls durch Zugabe von Katalysatoren beschleunigt werden.

Durch Zugabe eines Hydrolysestabilisators kann das Produkt gegen Wasserangriff stabilisiert werden.

Die Einstellung des Fließverhaltens kann durch einen Kettenregler wie z. B. durch den Einsatz von monofunktionellen Alkoholen erfolgen.

Die ausreagierte Schwarte wird im Anschluss granuliert, getrocknet, durch einen Extrusionsschritt über ein Farbmasterbatch z. B. in der Farbe schwarz, eingefärbt, getrocknet, kaltgemahlen und thermoplastisch durch Sintern zu einer Folie mit einer Dicke von 1 mm verarbeitet.

| Beispiel | Polyester [Gew-Teile] | PTHF 1000 [Gew-Teile] | PTHF1000 [Gew.-%] bezogen auf Gesamtpolyolmenge | Ethylenglykol [Gew.-Teile] | HDI [Gew-Teile] |
|---|---|---|---|---|---|
| 1 | 1300 | 0 | 0 | 162 | 549 |
| 2 | 1170 | 130 | 10 | 163 | 562 |
| 3 | 910 | 390 | 30 | 166 | 592 |
| 4 | 650 | 650 | 50 | 168 | 620 |
| 5 | 390 | 910 | 70 | 169 | 644 |

Überraschenderweise wurde gefunden, dass durch den Einsatz von dem erfindungsgemäßen Polytetrahydrofuran das Tieftemperaturverhalten verbessert werden kann. Dies wird durch die nachfolgenden Torsionsschwingungsversuche (TSV) nach DIN 53445 verdeutlicht.

Bei tiefen Temperaturen ist deutlich zu erkennen, dass durch Zumischen von PTHF1000 der Modul im Temperaturbereich 0°C - -60°C erniedrigt werden kann und das Material somit in diesem Bereich bei vergleichbarer Härte weniger spröde ist.

Gleichzeitig ist auch zu erkennen, dass durch die Polyolabmischung der Glasumwandlungspunkt (Peakmaximum von tan-delta) zu tieferen Temperaturen verschoben wird.

Nachfolgende Grafik und Tabelle verdeutlichen die Ergebnisse.

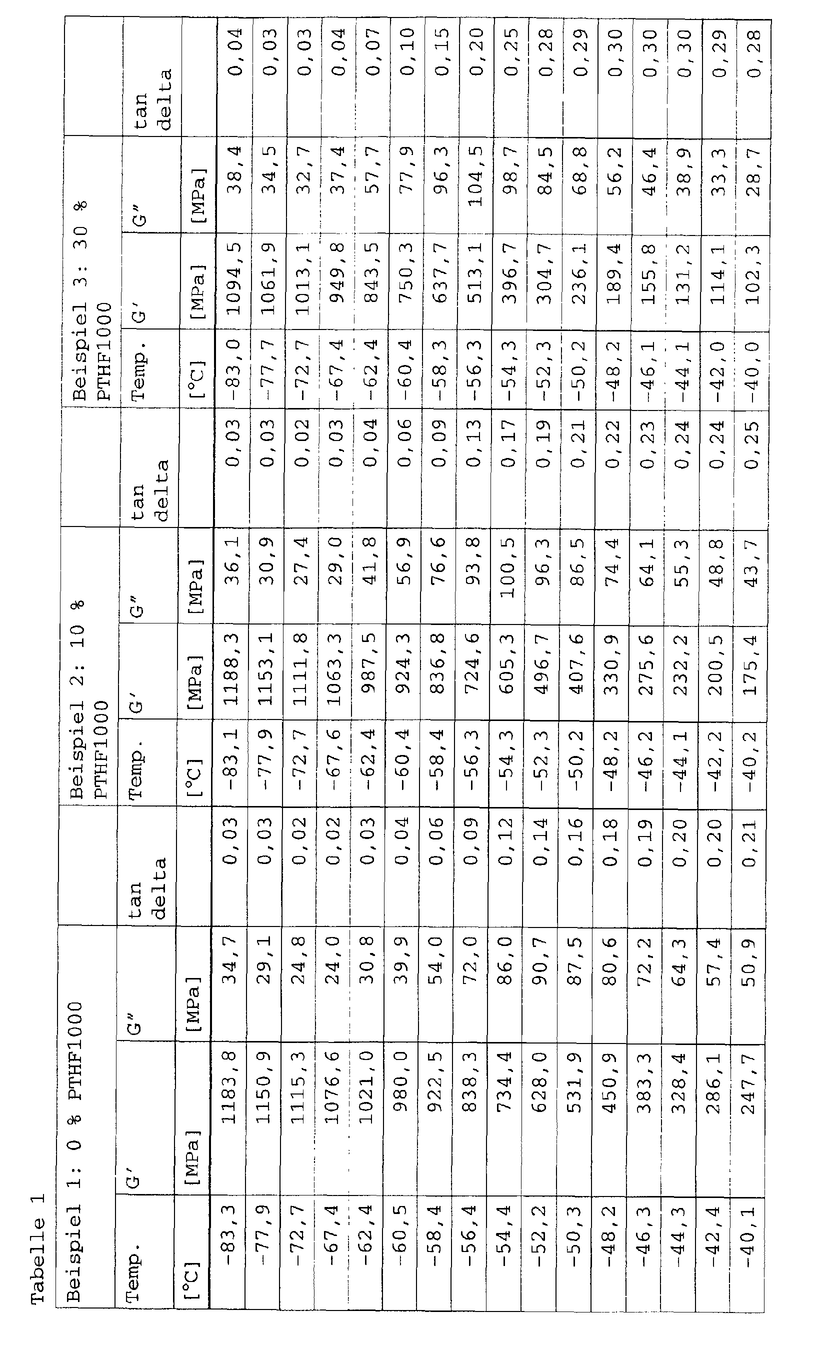

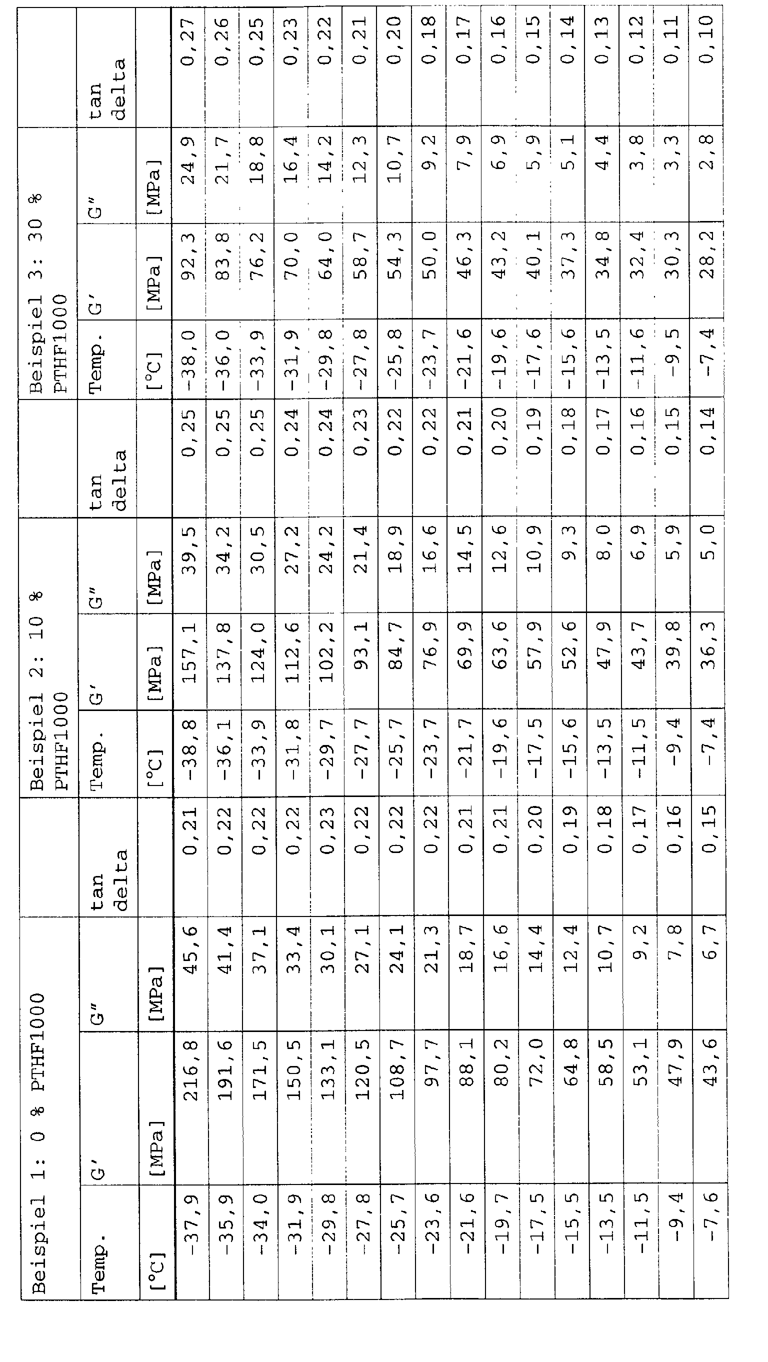

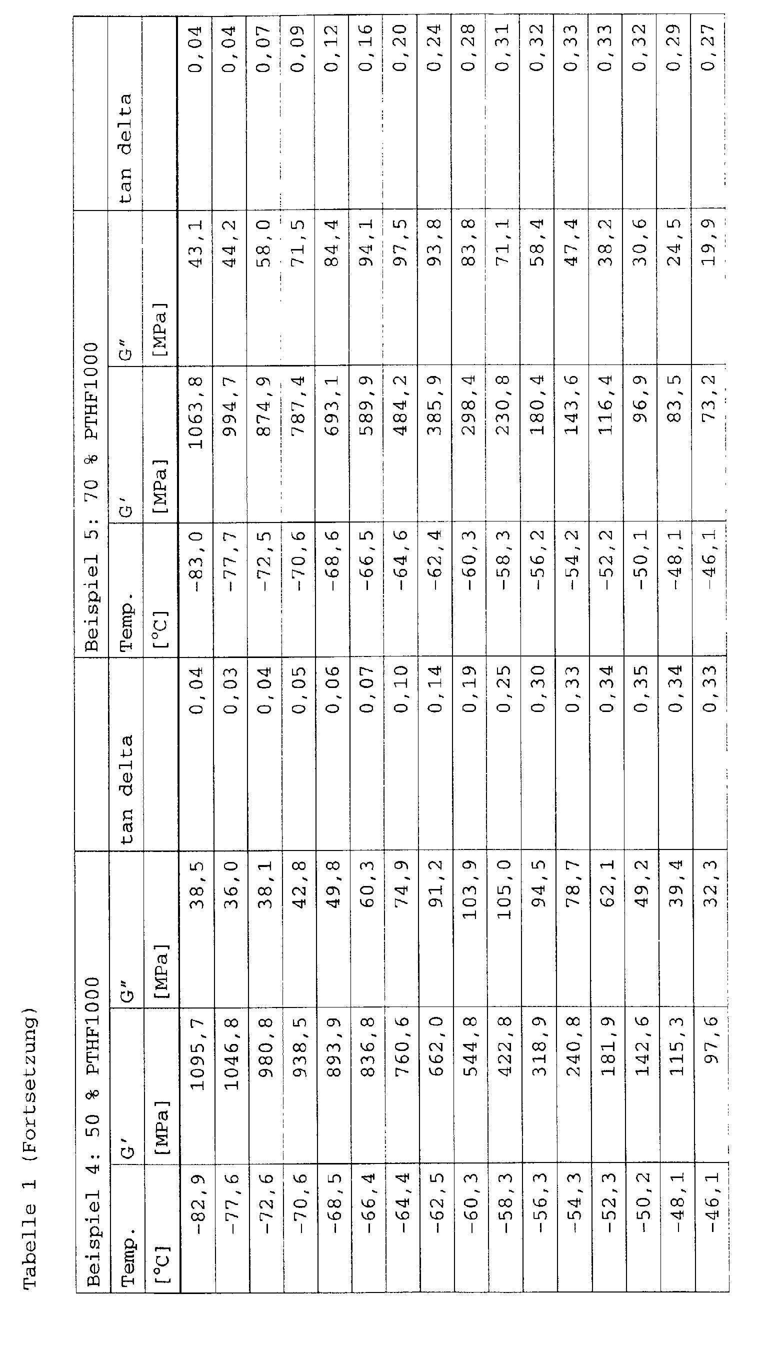

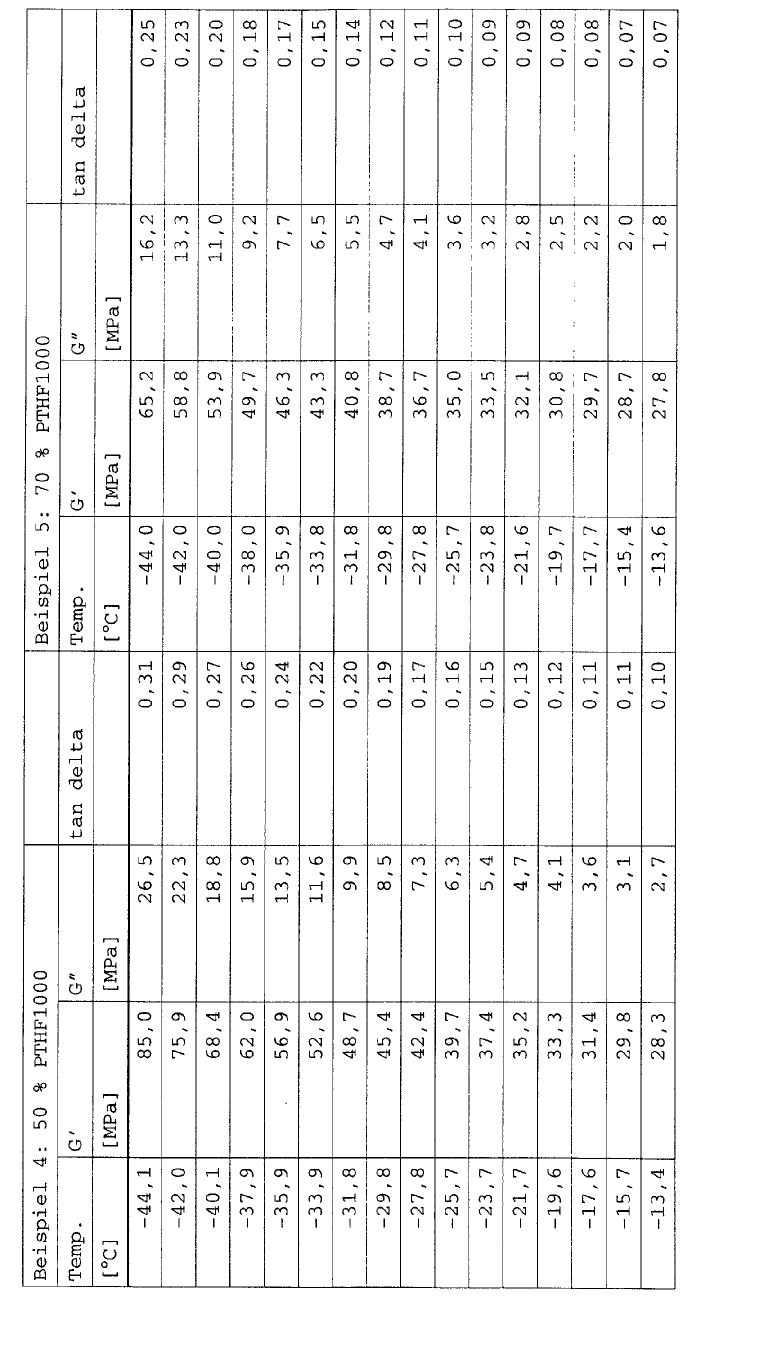

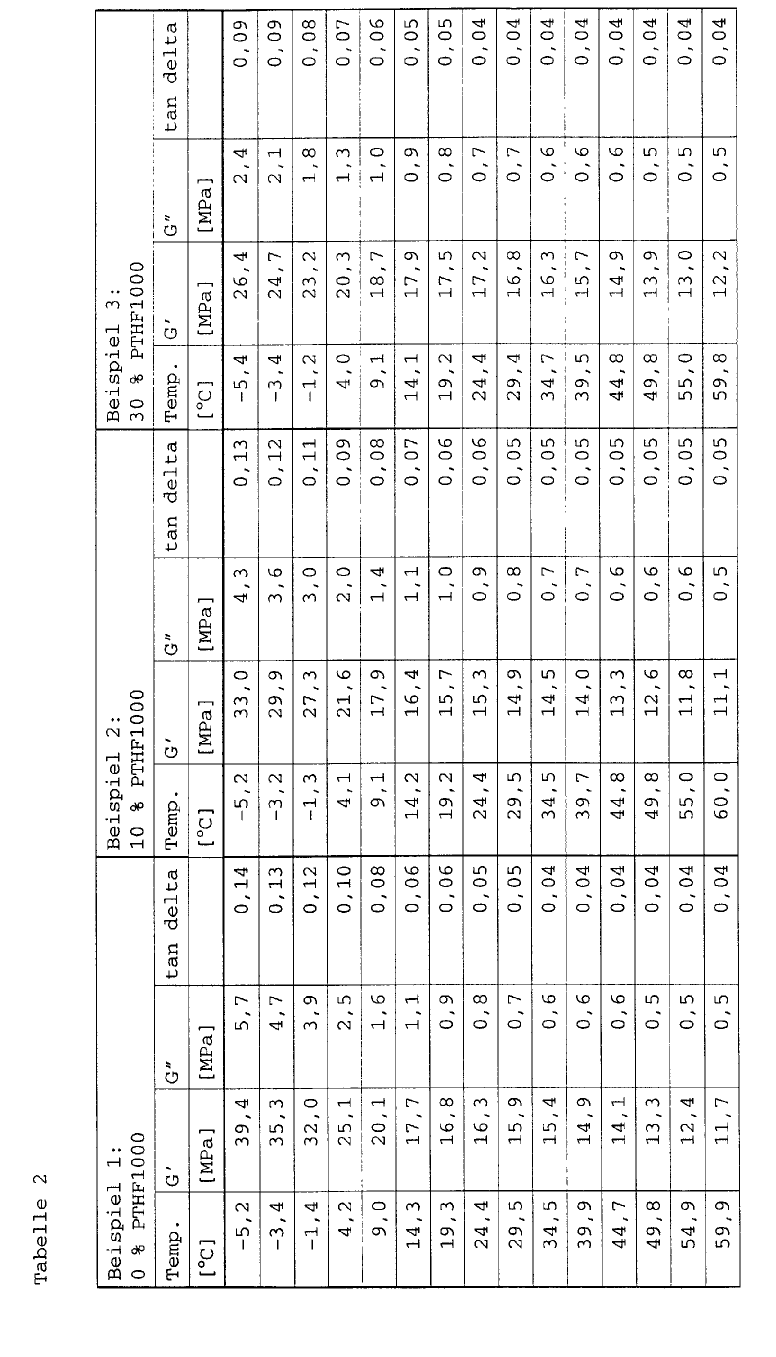

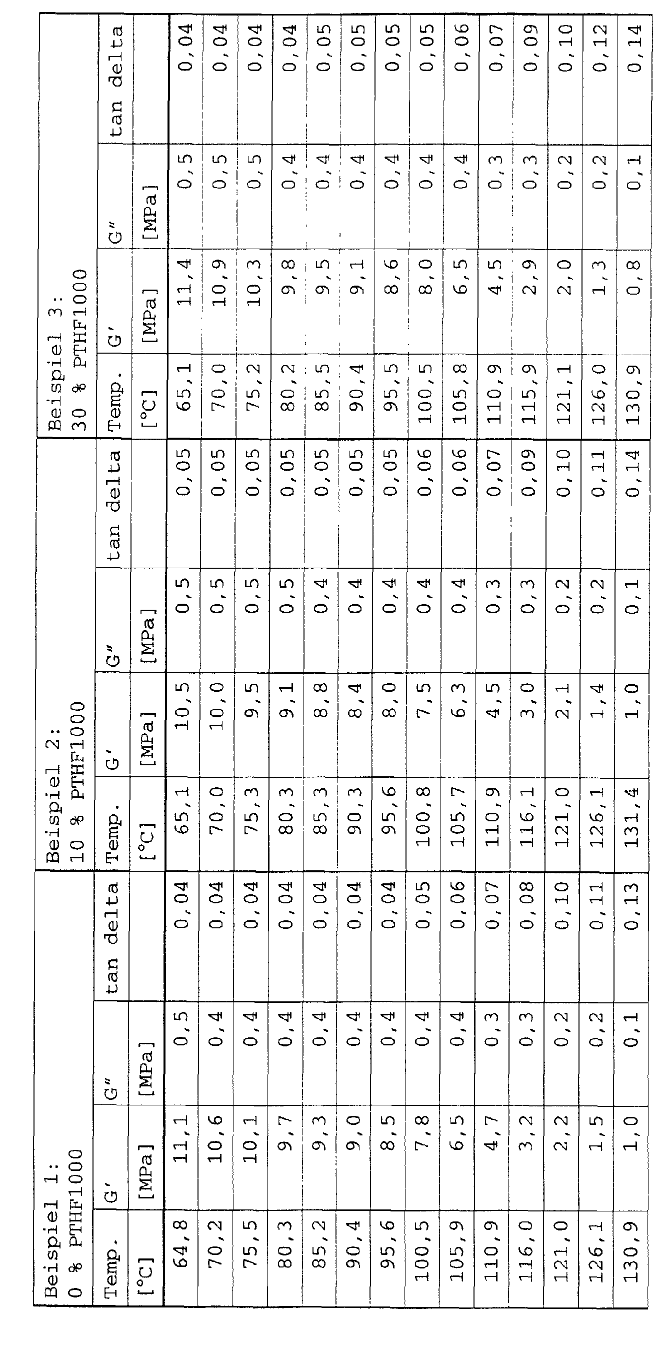

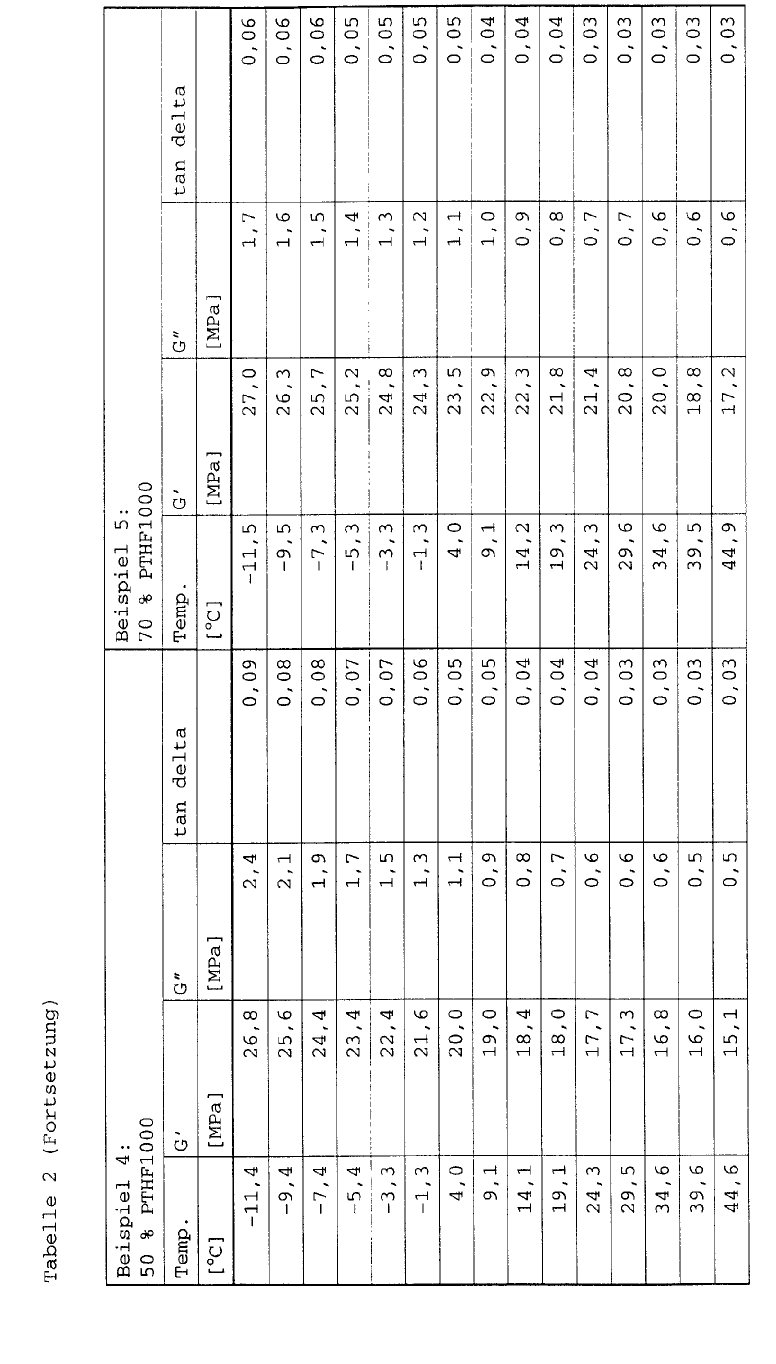

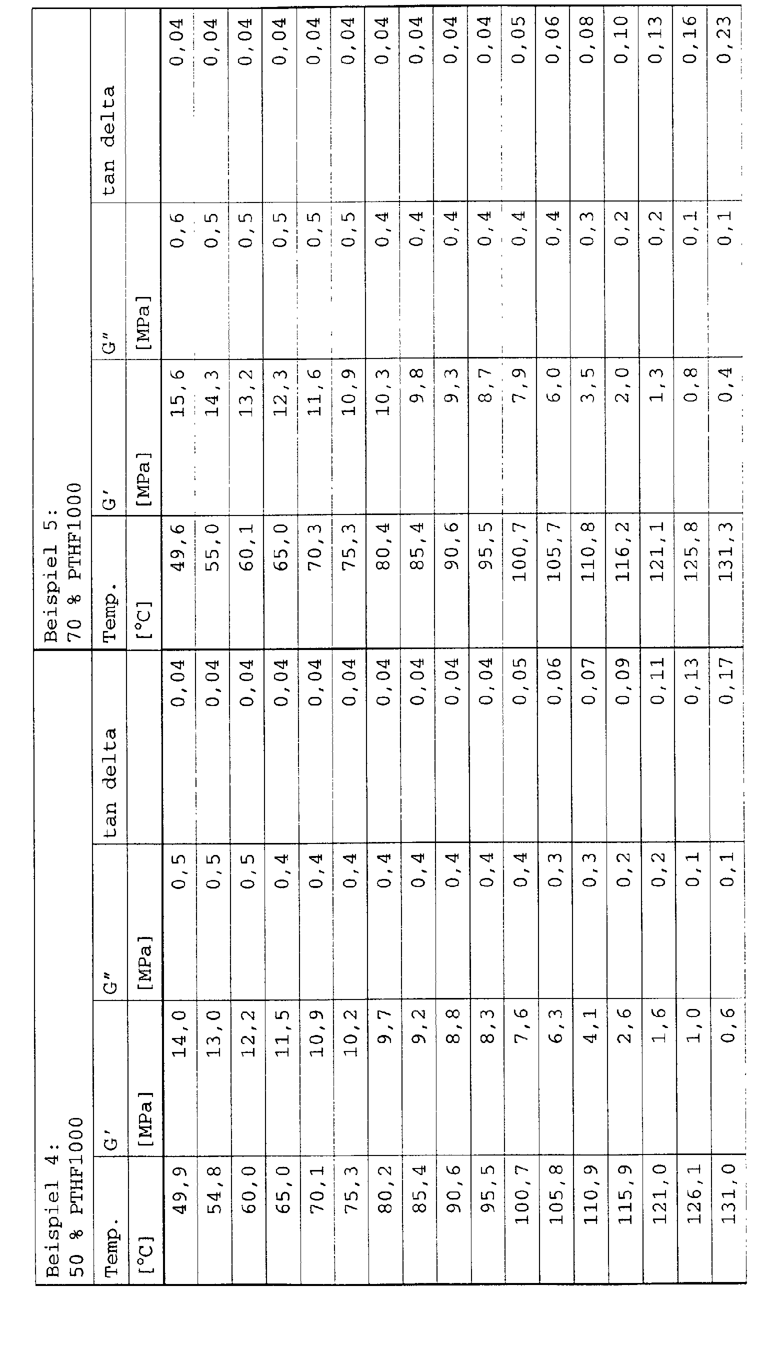

## Patentansprüche

1. Thermoplastische Polyurethane erhältlich durch Umsetzung von (a) aliphatischen Diisocyanaten mit Polytetrahydrofuran mit einem Molekulargewicht von 750 bis 2500 als (b) gegenüber Isocyanaten reaktive Verbindung.

2. Thermoplastische Polyurethane gemäß Anspruch 1, **dadurch gekennzeichnet, daß** der Gewichtsanteil des Polytetrahydrofuran mit einem Molekulargewicht von 750 bis 2500 an dem Gesamtgewicht der gegenüber Isocyanaten reaktiven Verbindungen (b) 5 bis 100 Gew.-% beträgt.

3. Spritzgegossene Kunststoffteile auf der Basis von thermoplastischen Polyurethanen gemäß Anspruch 1.

4. Extrudierte Kunststoffteile auf der Basis von thermoplastischen Polyurethanen gemäß Anspruch 1.

5. Folien auf der Basis von thermoplastischen Polyurethanen gemäß Anspruch 1.

6. Folien gemäß Anspruch 5 hergestellt nach dem Sinterverfahren.

7. Stoßfängerleisten, Automobil-antennen und -halterungen, Auβenspiegelfußdichtungen, Tür-griffe und -dichtungen, Lampendichtungen, Scheibenumspritzungen, Lautsprecherabdeckungen, Lüftungsteile, Dreh- und Schaltknöpfe, Türablagen, Armlehnen, Airbagabdeckungen, Pralltöpfe, Getränkehalter und Instrumententafeln auf der Basis von thermoplastischen Polyurethanen gemäß Anspruch 1.

8. Verfahren zur Herstellung von thermoplastischen Polyurethanen, wobei die thermoplastischen Polyurethane basieren auf der Umsetzung von (a) aliphatischen Diisocyanaten mit (b) gegenüber Isocyanaten reaktiven Verbindungen mit einem Molekulargewicht von 500 bis 8000 gegebenenfalls in Gegenwart von (c) Kettenverlängerungsmitteln mit einem Molekulargewicht von 60 bis 499, (d) Katalysatoren und/oder (e) üblichen Hilfsstoffen, **dadurch gekennzeichnet, daß** man als gegenüber Isocyanaten reaktiven Verbindungen (b) Polytetrahydrofuran mit einem Molekulargewicht von 750 bis 2500 einsetzt.

9. Verwendung von Polytetrahydrofuran mit einem Molekulargewicht von 750 bis 2500 bei der Herstellung von thermoplastischen Polyurethanen zur Erhöhung der elastischen Eigenschaften des thermoplastischen Polyurethans bei Temperaturen von -60 bis 0 °C.
